# EUROPÄISCHE PATENTSCHRIFT

(11) **EP 2 739 871 B1**
(45) Veröffentlichungstag und Bekanntmachung des Hinweises auf die Patenterteilung: **07.10.2015**
(21) Anmeldenummer: 12740299.8
(22) Anmeldetag: 13.07.2012
(51) Int. Cl.: F16D 25/08

(54) **AUSRÜCKSYSTEM**
DISENGAGING SYSTEM
SYSTÈME DE DÉBRAYAGE

(30) Priorität: 05.08.2011 DE 102011080544; 07.05.2012 DE 102012207545; 14.06.2012 DE 102012209943
(43) Veröffentlichungstag der Anmeldung: 11.06.2014
(73) Patentinhaber: Schaeffler Technologies AG & Co. KG, 91074 Herzogenaurach (DE)
(72) Erfinder: SESTER, Christof, 77723 Gengenbach (DE); KRAHTOV, Luben, 76530 Baden-Baden (DE)
(86) Internationale Anmeldenummer: PCT/DE2012/000708
(87) Internationale Veröffentlichungsnummer: WO 2013/020536

(56) Entgegenhaltungen:
- EP-A1- 1 146 244
- DE-A1-102009 019 999
- DE-A1-102009 034 812
- DE-A1-102009 050 346
- FR-A1- 2 772 443
- GB-A- 2 139 308

## Beschreibung

Die Erfindung betrifft ein Ausrücksystem zur Betätigung einer Kupplung, wobei das Ausrücksystem insbesondere in der Art eines CSC (Concentric Slave Cylinder) ausgebildet ist und zumindest einen in einem in einem Gehäuse entlang einer Längsachse verschiebbaren ersten Kolben aufweist, dessen in Richtung zu einem Druckraum weisendes Ende eine Dichtung aufweist und der an dem der Dichtung gegenüberliegenden Bereich auf ein Einrücklager wirkt, nach dem Oberbegriff des ersten Patentanspruchs.

Derartige Ausrücksysteme dienen zur Betätigung von Einfach- und Doppelkupplungen.

Bei bekannten hydraulischen CSC werden Blechteile z. Bsp. Anschlagbleche, Federhaltebleche in der Montagelinie durch Bördeln befestigt. Dabei wird das Blechteil mit dem Gehäuse beziehungsweise Führungshülse verbördelt und kann axiale Kräfte von z. Bsp. 1000 N übertragen.

Eine derartige Lösung eines CSC, welches ein scharfkantiges Federhalteblech aufweist, ist beispielsweise aus DE 10 2011 018 411 bekannt. Das Federhalteblech ist radial nach innen umgebördelt und am Innenumfang scharfkantig ausgebildet, was nachteilig für eine Dichtungsmontage ist, so dass über die Oberfläche des Blechteils keine Dichtungsmontage erfolgen kann, da die Dichtung immer über einen Grat beziehungsweise scharfe Kante montiert werden muss.

Weiterhin offenbart die FR 2 772 443 A1 ein Ausrücksystem zur Betätigung einer Kupplung gemäß den Merkmalen des Oberbegriffs des unabhängigen Patentanspruchs 1.

Aufgabe der Erfindung ist es, ein Ausrücksystem zur Betätigung einer Kupplung, wobei das Ausrücksystem insbesondere in der Art eines CSC (Concentric Slave Cylinder) ausgebildet ist, zu entwickeln, welches es ermöglicht, nach der Befestigung von Blechteilen eine Dichtungsmontage der Kolbendichtung zu gewährleisten und dabei eine Beschädigung der Dichtung zu vermeiden.

Diese Aufgabe wird erfindungsgemäß mit den kennzeichnenden Merkmalen des ersten Patentanspruchs gelöst. Vorteilhafte Ausgestaltungen ergeben sich aus den Unteransprüchen.

Das Ausrücksystem zur Betätigung einer Kupplung ist insbesondere in der Art eines CSC (Concentric Slave Cylinder) ausgebildet und weist zumindest einen in einem Gehäuse entlang einer Längsachse verschiebbaren ersten Kolben auf, dessen in Richtung zu einem Druckraum weisendes Ende mit einer Kolbendichtung zum Druckraum abdichtet und der an dem der Kolbendichtung gegenüberliegenden Bereich auf ein Einrücklager wirkt, wobei erfindungsgemäß ein oder mehrere in dem CSC vorhandene Blechteile mit einer Kontur versehen sind, die in Montagerichtung der Kolbendichtung keine scharfen Kanten aufweist.

Dadurch ist es möglich, zuerst das Blechteil am Kolben zu befestigen und anschließend durch das Blechteil hindurch die Kolbendichtung zu montieren.

Das Blechteil ist dazu mit einer Bördelkontur versehen, die nach dessen Befestigen am Gehäuse des CSC einen Innendurchmesser aufweist, der das Hindurchführen der Kolbendichtung, insbesondere das Gleiten der Kolbendichtung in die Druckkammer des Gehäuses gewährleistet und somit eine Fügehilfe für die Kolbendichtung bildet.

In Richtung zum Druckraum weist das Blechteil ein erstes Ende mit einem geringeren Durchmesser auf als sein in Richtung zum Einrücklager weisendes zweites Ende. Weiterhin ist das erste Ende des Blechteils mit einem radial nach außen gebogenen Bereich versehen, der nach dem axialen Einbringen des Blechteils in einen Hinterschnitt des Gehäuses des CSC eingreift.

Das Blechteil wird dabei funktionsbedingt mit seinem ersten Ende im Bereich der Dichtkammer am Gehäuse befestigt und ist insbesondere in Form eines Federhaltebleches für eine im CSC angeordnete Feder zur Abstützung eines Schleppmomentes und/oder einer Vorlast ausgebildet.

Bevorzugt erfolgt dies durch radial nach außen gerichtetes Umformen/Bördeln des zweiten Endes des Blechteils in den Hinterschnitt des Gehäuses. Nach dem Befestigen des Blechteils am Gehäuse wird der radial nach außen weisende geringste Durchmesser des Blechteils durch den Biegeradius der Bördelkontur gebildet, so dass die Kolbendichtung sicher montiert werden kann.

Die erfindungsgemäße Lösung ermöglicht eine Dichtungsmontage, insbesondere bei einem Doppel-CSC zur Betätigung einer Doppelkupplung nach der Verbördelung des Federhalteblechs, welches durch seine spezielle Bördelkontur in Richtung zur Dichtung nun keine scharfen Kanten mehr aufweist.

Die Erfindung wird nachfolgend an einem Ausführungsbeispiel und zugehörgen Zeichnungen näher erläutert.

Es zeigen:
- Figur 1: einen Längsschnitt durch einen Doppel-CSC,
- Figur 2: die Einzelheit X gemäß Figur 1,
- Figur 3: die Kontur des Querschnitts des Federhalteblechs vor dem Einfügen in das Gehäuse,
- Figur 4: die Kontur des Querschnitts des Federhalteblechs nach dem Befestigen in dem Gehäuse

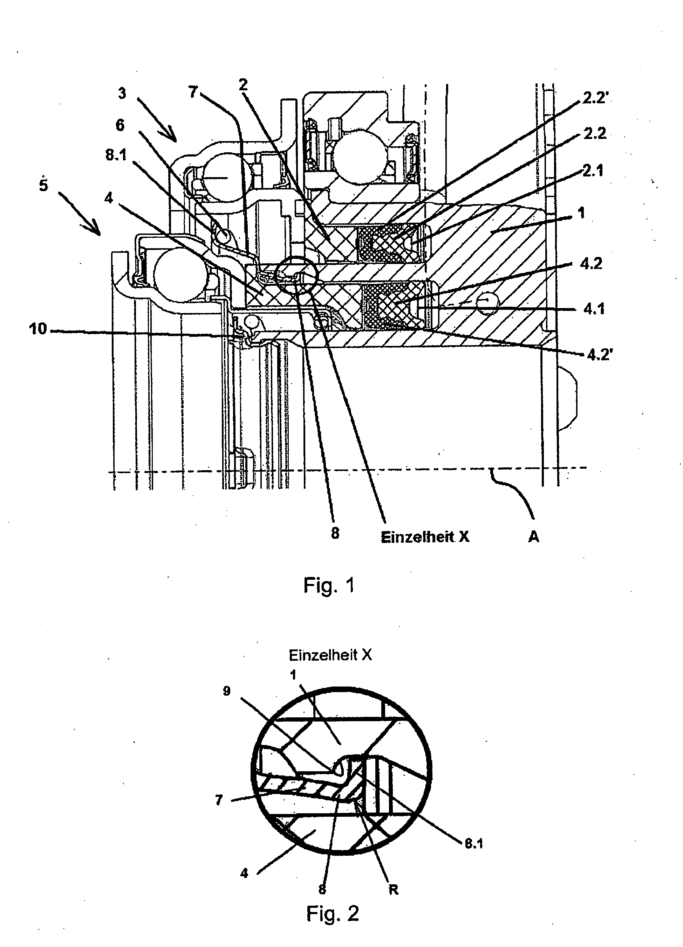

Gemäß Figur 1 dient der CSC (Concentric Slave Cylinder) zur Betätigung einer Doppelkupplung. Er weist ein Gehäuse 1 auf, in welchem ein erster Kolben 2 in einem Druckraum 2.1 in Richtung zur Längsachse A verschiebbar angeordnet ist. An dem ersten Kolben 2 ist in Richtung zum ersten Druckraum 2.1 eine erste Kolbendichtung 2.2 an einem ersten Dichtringträger 2.2' befestigt und an dem der ersten Dichtung 2.2 gegenüberliegenden Ende wirkt der erste Kolben 2 auf ein erstes Einrücklager 3.

Konzentrisch innerhalb des ersten Kolbens 2 ist ein zweiter Kolben 4 in einem zweiten Druckraum 4.1 axial verschiebbar gelagert und über eine zweite Dichtung 4.2, die an einem am zweiten Kolben 4.2 befestigten zweiten Dichtringträger 4.2' angeordnet ist, zum zweiten Druckraum 4.1 abgedichtet. An dem der zweiten Dichtung 4.2 gegenüberliegenden Ende wirkt der zweite Kolben 4 auf ein zweites Ausrücklager 5.

Zur Übertragung eines Schleppmomentes ist eine Druckfeder 6 vorgesehen, die an einem Blechteil in Form eines Federhaltebleches 7 aufgenommen wird. Das Federhalteblech 7 ist an seinem in Richtung zum zweiten Druckraum 4.1 weisenden ersten Ende 8 mit einem radial nach außen gebogenen Bereich 8.1 (s. Figur 2) verbunden, der nach dem axialen Einbringen des Federhalteblechs 7 in einen Hinterschnitt 9 des Gehäuses 1 eingreift.

Die Druckfeder 6 wird bei entsprechendem Schleppmoment von dem Federhalteblech 7 radial abgestützt.

Am Innendurchmesser des Gehäuses 1 ist ein weiteres Blechteil 10 befestigt, welches in herkömmlicher Weise nach innen umgebördelt wurde, da durch dessen Innendurchmesser keine Dichtung montiert wird.

Figur 2 zeigt die Einzelheit gemäß Figur 1, aus welcher nochmals ersichtlich ist, dass das erste Ende 8.1 des Federhaltebleches 7 einen radial nach außen gebogenen Bereich 8.1' aufweist, der in den Hinderschnitt 9 des Gehäuses 1 geformt wurde. Dadurch ergibt sich am Innendurchmesser des Federhaltebleches 7 ein Radius R, durch welchen die zweite Kolbendichtung (hier nicht sichtbar) des zweiten Kolbens 4 beschädigungsfrei montiert werden kann.

Aus Figur ist 3 ersichtlich, dass das Federhalteblech 7 vor der Montage bereits eine vorgeformte Kontur aufweist, deren erstes Ende 8.1 einen radial nach außen weisenden Bereich aufweist. Auch das einen größeren Durchmesser aufweisende zweite Ende 8.2 besitzt einen radial nach außen weisenden Bereich (nicht bezeichnet).

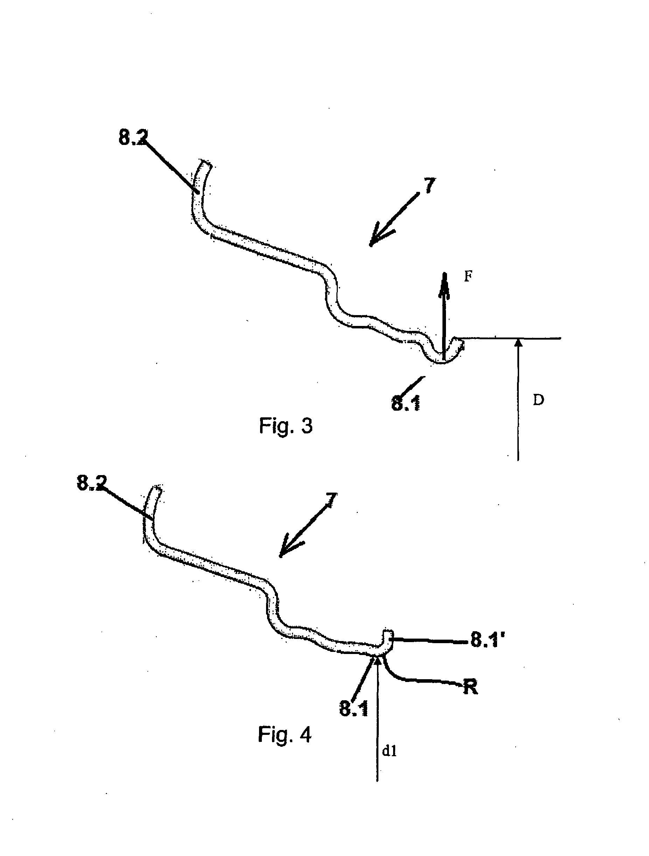

Der Außendurchmesser D des Federhaltebleches 7 muss vor der Montage so dimensioniert sein, dass sich dieser axial in das Gehäuse 1 schieben lässt. Befindet sich das erste Ende 8.1 im Bereich des Hinterschnittes 9 des Gehäuses 1, wird dieses erste Ende nun mit einer Umformkraft F radial nach außen umgebördelt, so dass es in den Hinterschnitt 9 des Gehäuses 1 eingreift (s. Fig. 2). Dadurch ist das Federhalteblech 7 am Gehäuse 1 befestigt. Es wurde damit eine Bördelkontur des Federbleches 7 gemäß Figur 4 erzeugt, die im Bereich ihres kleinsten Innendurchmessers d1 einen Radius R aufweist, der eine Montage der zweiten Kolbendichtung gewährleistet.

Das Federhalteblech 7 ist weiterhin mit einer entsprechende Geometrie und Oberfläche versehen, die das Gleiten der Dichtung, hier der zweiten Kolbendichtung 4.2, in den zweiten Druckraum 4.1 des Gehäuses 1 ermöglichen, so dass das Federhalteblech 7 eine Montagehilfe für die Kolbendichtung 4.2 bildet.

Dadurch, dass das erste und zweite Ende 8.1, 8.2 des Federhaltebleches 7 radial nach außen gebogen sind, liegen die scharfen Kanten und Ecken immer außerhalb des Montagebereichs der Dichtung.

Das Blechteil in Form des Federhaltebleches 7 ist insbesondere so ausgelegt, dass es Axialkräfte von z. B. 1000 N übertragen kann.

### Bezugszeichenliste

- 1: Gehäuse
- 2: erster Kolben
- 2.1: erster Druckraum
- 2.2: erste Dichtung
- 2.2': erster Dichtringträger
- 3: Einrücklager
- 3.1: erster Lagerring
- 4: zweiter Kolben
- 4.1: zweiter Druckraum
- 4.2: zweite Dichtung
- 4.2': zweiter Dichtringträger
- 5: zweites Ausrücklager
- 6: Druckfeder
- 7: Federhalteblech
- 8.1: erstes Ende
- 8.1': radial nach außen gebogenen Bereich 8.1'
- 8.2: zweites Ende
- 9: Hinterschnitt
- 10: weiteres Blechteil

- A: Längsachse
- D: Außendurchmesser des Federhaltebleches 7 vor dem Bördeln
- d1: Innendurchmesser des Federhaltebleches 7 nach dem Bördeln
- F: Umformkraft
- R: Radius

## Patentansprüche

1. Ausrücksystem zur Betätigung einer Kupplung, wobei das Ausrücksystem in der Art eines CSC (Concentric Slave Cylinder) ausgebildet ist und zumindest einen in einem Gehäuse (1) entlang einer Längsachse (A) verschiebbaren Kolben (4) aufweist, dessen in Richtung zu einem Druckraum weisendes Ende mit einer Kolbendichtung (4.2) zum Druckraum abdichtet und der an dem der Kolbendichtung (4.2) gegenüberliegenden Bereich auf ein Einrücklager (5) wirkt, wobei ein in dem CSC vorhandenes Blechteil (7) eine Kontur besitzt, die keine die Montage der Kolbendichtung (4.2) beeinträchtigende scharfen Kanten aufweist, und wobei das Blechteil (7) in Richtung zum Druckraum ein erstes Ende (8.1) mit einem geringeren Durchmesser aufweist als sein in Richtung zum Einrücklager (5) weisendes zweites Ende (8.2), **dadurch gekennzeichnet, dass** das Blechteil (7) funktionsbedingt mit seinem ersten Ende (8.1) im Bereich eines Druckraums am Gehäuse (1) befestigt ist und in Form eines Federhaltebleches für eine im CSC angeordnete Feder zur Abstützung eines Schleppmomentes und/oder einer Vorlast ausgebildet ist.

2. Ausrücksystem nach Anspruch 1, **dadurch gekennzeichnet, dass** das Blechteil (7) eine Bördelkontur aufweist, die nach dessen Befestigen am Gehäuse (1) des CSC einen Innendurchmesser (d1) aufweist, der das Hindurchführen der Kolbendichtung (4.2) gewährleistet.

3. Ausrücksystem nach Anspruch 1 oder 2, **dadurch gekennzeichnet, dass** das Blechteil (7) das Gleiten der Kolbendichtung (4.2) in die Druckkammer des Gehäuses (1) gewährleistet.

4. Ausrücksystem nach einem der Ansprüche 1 bis 3, **dadurch gekennzeichnet, dass** das Blechteil (7) eine Fügehilfe für die Kolbendichtung (4.2) bildet.

5. Ausrücksystem nach einem der Ansprüche 1 bis 4, **dadurch gekennzeichnet, dass** das erste Ende (8.1) des Blechteils (7) einen radial nach außen gebogenen Bereich (8.1') aufweist, der nach dem axialen Einbringen des Blechteils (7) in das CSC in einen Hinterschnitt (9) des Gehäuses (1) eingreift.

6. Ausrücksystem nach Anspruch 5, **dadurch gekennzeichnet, dass** das erste Ende (8.1) des Blechteils (7) nach dem axialen Einbringen in das Gehäuse (1) durch radial nach außen gerichtetes Umformen/Bördeln in den Hinterschnitt (9) des Gehäuses (1) eingeformt ist.

7. Ausrücksystem nach Anspruch 6, **dadurch gekennzeichnet, dass** der radial nach außen weisende geringste Durchmesser/Innendurchmesser (di) des Blechteils (7) durch einen Radius (R) einer Bördelkontur gebildet wird.

## Claims

1. Disengaging system for actuating a clutch, wherein the disengaging system is formed in the manner of a CSC (concentric slave cylinder) and has at least one piston (4) which is displaceable in a housing (1) along a longitudinal axis (A) and whose end pointing in the direction of a pressure chamber imparts a sealing action with respect to the pressure chamber by way of a piston seal (4.2) and which acts, at the region situated opposite the piston seal (4.2), on an engagement bearing (5), wherein a sheet-metal part (7) provided in the CSC has a contour which does not have any sharp edges that impede the installation of the piston seal (4.2), and wherein the sheet-metal part (7) has, in the direction of the pressure chamber, a first end (8.1) with a diameter smaller than its second end (8.2) pointing in the direction of the engagement bearing (5), **characterized in that** the sheet-metal part (7) is, for functional reasons, fastened by way of its first end (8.1) to the housing (1) in the region of a pressure chamber and is formed in the manner of a spring-retaining plate for a spring which is arranged in the CSC and which serves for supporting a drag torque and/or a preload.

2. Disengaging system according to Claim 1, **characterized in that** the sheet-metal part (7) has a flanged contour which, after the fastening of said sheet-metal part to the housing (1) of the CSC, has an inner diameter (d1) which ensures that the piston seal (4.2) can be led through.

3. Disengaging system according to Claim 1 or 2, **characterized in that** the sheet-metal part (7) ensures that the piston seal (4.2) can slide into the pressure chamber of the housing (1).

4. Disengaging system according to one of Claims 1 to 3, **characterized in that** the sheet-metal part (7) forms an installation aid for the piston seal (4.2).

5. Disengaging system according to one of Claims 1 to 4, **characterized in that** the first end (8.1) of the sheet-metal part (7) has a radially outwardly bent region (8.1') which, after the axial insertion of the sheet-metal part (7) into the CSC, engages into an undercut (9) of the housing (1).

6. Disengaging system according to Claim 5, **characterized in that** the first end (8.1) of the sheet-metal part (7) is, after the axial insertion into the housing (1), deformed into the undercut (9) of the housing (1) by way of radially outwardly directed deformation/flanging.

7. Disengaging system according to Claim 6, **characterized in that** the radially outwardly pointing smallest diameter/inner diameter (di) of the sheet-metal part (7) is formed by a radius (R) of a flanged contour.

## Revendications

1. Système de débrayage pour actionner un embrayage, dans lequel le système de débrayage est réalisé à la manière d'un CSC ("Cylindre Récepteur Concentrique") et présente au moins un piston (4) pouvant coulisser le long d'un axe longitudinal (A) dans un boîtier (1), dont l'extrémité dirigée en direction d'une chambre de pression est étanche avec un joint de piston (4.2) par rapport à la chambre de pression et qui agit sur un palier d'embrayage (5) à la région opposée au joint de piston (4.2), dans lequel une pièce de tôle (7) présente dans le CSC possède un contour qui ne présente aucune arête vive compromettant le montage du joint de piston (4.2), et dans lequel la pièce de tôle (7) présente en direction de la chambre de pression une première extrémité (8.1) avec un plus petit diamètre que sa deuxième extrémité orientée en direction du palier d'embrayage (5), **caractérisé en ce que** la pièce de tôle (7) est fixée en raison de sa fonction au boîtier (1) avec sa première extrémité (8.1) dans la région d'une chambre de pression et est configurée en forme d'une tôle de retenue de ressort pour un ressort disposé dans le CSC pour le soutien d'un couple d'entraînement et/ou d'une pré-charge.

2. Système de débrayage selon la revendication 1, **caractérisé en ce que** la pièce de tôle (7) présente un contour rabattu, qui présente après sa fixation au boîtier (1) du CSC un diamètre intérieur (d1), qui garantit le passage du joint de piston (4.2).

3. Système de débrayage selon la revendication 1 ou 2, **caractérisé en ce que** la pièce de tôle (7) garantit le glissement du joint de piston (4.2) dans la chambre de pression du boîtier (1).

4. Système de débrayage selon l'une quelconque des revendications 1 à 3, **caractérisé en ce que** la pièce de tôle (7) forme un auxiliaire de jonction pour le joint de piston (4.2).

5. Système de débrayage selon l'une quelconque des revendications 1 à 4, **caractérisé en ce que** la première extrémité (8.1) de la pièce de tôle (1) présente une région pliée radialement vers l'extérieur (8.1'), qui s'engage dans une contre-dépouille (9) du boîtier (1) après l'introduction axiale de la pièce de tôle (7) dans le CSC.

6. Système de débrayage selon la revendication 5, **caractérisé en ce que** la première extrémité (8.1) de la pièce de tôle (7) est façonnée dans la contre-dépouille (9) du boîtier (1) par déformation/rabattement dirigé radialement vers l'extérieur après l'introduction dans le boîtier (1).

7. Système de débrayage selon la revendication 6, **caractérisé en ce que** le plus petit diamètre/diamètre intérieur (di) de la pièce de tôle (7) dirigé radialement vers l'extérieur est formé par un rayon (R) d'un contour rabattu.
